(19) Europäisches Patentamt
European Patent Office
Office européen des brevets

(11) EP 3 738 746 A1

(12) EUROPEAN PATENT APPLICATION

(43) Date of publication:
**18.11.2020 Bulletin 2020/47**

(21) Application number: **19174134.7**

(22) Date of filing: **13.05.2019**

(51) Int Cl.:
***B29C 64/118*** *(2017.01)* ***B29C 64/194*** *(2017.01)*
***B29C 64/209*** *(2017.01)* ***B29C 64/264*** *(2017.01)*
***B33Y 10/00*** *(2015.01)* ***B33Y 30/00*** *(2015.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Henkel AG & Co. KGaA**
**40589 Düsseldorf (DE)**

(72) Inventors:
- **Poeller, Sascha**
  **40589 Düsseldorf (DE)**
- **Schiel, Manuel**
  **40219 Düsseldorf (DE)**
- **Rossberg, Tanja**
  **42781 Haan (DE)**
- **Ferencz, Andreas**
  **40223 Düssedorf (DE)**

(74) Representative: **Viering, Jentschura & Partner mbB**
**Patent- und Rechtsanwälte**
**Hamborner Straße 53**
**40472 Düsseldorf (DE)**

# (54) 3D PRINTING METHOD FOR RADIATION CURABLE COMPOSITIONS

(57) The present method lies in the field of 3D printing methods. In particular, the method relates to 3D printing methods for the production of a 3D part in a layer-by-layer manner, wherein the method comprises providing a carrier substrate to support the three-dimensional part and a print head connected to a reservoir of a printable composition; printing the printable composition with the print head in form of extrudate strands onto the carrier substrate, wherein the distance of the print head orifice to the carrier substrate is equal to or greater than the thickness of the printed extrudate strand, to form a first layer; printing the printable composition with the print head in form of extrudate strand onto the first layer, wherein the distance of the print head orifice to the first layer is equal to or greater than the thickness of the printed extrudate strand, to form a second layer; and optionally repeating the last step at least once to form a third or subsequent layer.

EP 3 738 746 A1

## Description

The present invention lies in the field of 3D printing methods. In particular, the invention relates to 3D printing methods for the production of a 3D part in a layer-by-layer manner, wherein radiation curable printing compositions are used and the method includes a curing step by controlled exposure of the printed layers to radiation.

In 3D printing applications, also referred herein as additive manufacturing, a wide variety of polymeric materials are used. In various of these applications, three-dimensional objects are formed in a layer-by-layer manner, i.e. by repeatedly printing material layers on top of each other to form the desired object. Many of the existing polymeric compositions for 3D printing are liquid or are liquefied for the actual printing, for example by melting, and become solid after being printed, for example in form of filaments.

In alternative approaches, reactive printable compositions are used that cure after having been printed. On possible curing mechanism is radiation curing. Besides being a fast and effective curing mechanism, this allows to control the curing step in that the printed layers are only cured once exposed to suitable radiation. While this already provides for advantages over other curing mechanisms that rely on the reaction between different components of a composition, it still has drawbacks in that premature curing interferes with the printing process and may block the print head and/or lead to defects in the manufactured parts/articles.

The present invention overcomes this problem by providing a method for additive manufacturing that uses a radiation curable printable composition that is cured once printed by exposure to radiation such that the orifice of the print head and the printable and radiation curable composition exiting the print head orifice are not exposed to the radiation.

In a first aspect, the present invention relates to a method for additive manufacturing a three-dimensional part, wherein the method comprises

(i) providing a carrier substrate to support the three-dimensional part and a print head connected to a reservoir of at least one printable and radiation curable composition and a source of radiation for curing the composition;
(ii) printing the at least one printable and radiation curable composition with the print head in form of extrudate strands onto the carrier substrate to form a first layer;
(iii) curing the at least one printable and radiation curable composition by exposure of the printed layer to radiation emitted by the source of radiation, wherein the orifice of the print head and the at least one printable and radiation curable composition exiting the print head orifice are not exposed to the radiation to avoid premature curing of the at least one printable and radiation curable composition; and
(iv) optionally repeating steps (ii) and (iii) at least once to form a second or subsequent layer.

In another aspect, the invention also relates to a 3D printing device that comprises a print head and a radiation source and a means to avoid exposure of the orifice of the print head and the printable and radiation curable composition exiting the print head orifice to the radiation of the radiation source.

"Additive manufacturing" and "3D printing" are used interchangeably herein to refer to methods for the formation of three-dimensional objects or parts in which material is joined or solidified, typically under computer control, with material being added together in a layer-by-layer manner.

"Layer-by-layer", as used herein, relates to a method of additive manufacturing in which an object is produced by printing separate layers on top of each other such that they form the desired shape. It is typically important to achieve sufficient inter-layer adhesion to produce a stable three-dimensional object.

"Print head", as used herein, relates to the part of an apparatus used for depositing the printing material in form of a layer onto a support or an already formed layer. The print head is typically freely movable to allow formation of layers in the desired shape on a substrate (typically by horizontal movement) and print layers on top of already existing layers (typically be retracting the print head in the vertical direction such that the distance to the substrate or printed layer is adjusted to be suitable for printing the next layer). Alternatively, the print head may be fixed and the substrate is moved relative to the print head or both are movable relative to each other. The print head has typically at least one orifice or nozzle through which the printable material is deposited. Herein, the printable material is preferably in form of a pasty polymeric composition, so that the print head orifice can resemble an extruder die and the printed material be in form of an extrudate strand. Also if reference is made herein to a "print head orifice", it is understood that this term also includes embodiments where the print head has more than one opening/orifice.

"Extrudate strand", as used herein, relates to the form of the printed/extruded material once it leaves the print heads orifice and forms the layer. It is in form of a strand that extends in the direction of the movement of the print head. Strands printed next to each other, for example parallel to each other, can together form one layer (for this they may fuse to a certain extent), while strands printed on top of an existing strand form the next layer in the layer-by-layer manufacturing process.

"The at least one printable and radiation curable composition exiting the print head orifice", as used herein, refers to the extrudate strand of the printable material that exits the print

A "composition" is understood in the context of the present invention as a mixture of at least two ingredients.

The term "curable" is to be understood to mean that, under the influence of external conditions, in particular under the influence of radiation, the composition can pass from a relatively flexible state, optionally possessing plastic ductility, to a harder state. "Radiation curable", as used herein, relates to curing under the influence, e.g. exposure, to radiation, such as electromagnetic radiation, in particular UV radiation or visible light. UV radiation is in the range of 100 to 400 nanometers (nm). Visible light is in the range of 400 to 780 nanometers (nm). "Moisture-curable", as used herein, thus relates to curing under the influence of moisture, typically humidity from the surrounding air. "Heat-curable", as used herein, thus relates to curing under the influence of heat, typically by heating the three-dimensional part in an oven to temperatures above 100°C.

Provided reference is made to molecular weights of oligomers or polymers in the present application, the quantities, unless otherwise stated, refer to the number average, i.e., the $M_n$ value, and not to the weight average molecular weight. The number average molecular weight $M_n$, as well as the weight average molecular weight $M_w$, is determined according to the present invention by gel permeation chromatography (GPC, also known as SEC) at 23°C using a styrene standard. The molecular weight can be determined by gel permeation chromatography (GPC) with tetrahydrofuran (THF) as the eluent according to DIN 55672-1:2007-08, preferably at 23°C or 35°C. Molecular weights of monomeric compounds are calculated based on the respective molecular formula and the known molecular weights of the individual atoms. These methods are known to one skilled in the art.

"At least one," as used herein, refers to 1 or more, i.e., 1, 2, 3, 4, 5, 6, 7, 8, 9, or more. In regard to an ingredient, the term relates to the type of ingredient and not to the absolute number of molecules. "At least one polymer" thus means, for example, at least one type of polymer, i.e., that a type of polymer or a mixture of a number of different polymers can be used. Together with weight data, the term refers to all compounds of the given type, contained in a composition/mixture, i.e., that the composition contains no other compounds of this type beyond the given amount of the relevant compounds.

All percentage data, provided in connection with the compositions described herein, refer to % by weight, based in each case on the relevant mixture, unless explicitly indicated otherwise.

"Consisting essentially of", as used herein, means that the respective composition is composed mainly, i.e. by at least 50% by weight, for example at least 60, 70 or 80 %, of the referenced component(s), as described below.

The invention relates to methods for additive manufacturing a three-dimensional part in a layer-by-layer manner, wherein the method comprises, in a first step, providing a carrier substrate to support the three-dimensional part and a print head connected to a reservoir of at least one printable and radiation curable composition and a source of radiation for curing the composition.

The carrier substrate may be any suitable substrate. It may be a printing bed that may be flat, essentially flat or curved. It can be made of any suitable material and can also be in form of a tray. In various embodiments, it can be made of metal, glass or plastic. It is preferably designed such that it allows easy release of the layers printed thereon, e.g. being inert towards the printed material and any potential curing process used.

In various embodiments, the print head forms part of a printing apparatus and is connected to at least one reservoir of at least one printable composition. While the print head may, in various embodiments, be connected to multiple reservoirs of different printable compositions, it is herein preferred that the print head is connected to one reservoir of one printable composition. The print head is that part of the printing apparatus that deposits the printing material onto the substrate or an already formed layer in the desired pattern. To achieve this, it is connected to a feeding means through which the print head is fed with the printable composition, such as a pump, conveyor and the like, via tubing/pipes. The print head has an orifice or nozzle through which the printable composition leaves the print head and is deposited on a surface. The orifice/nozzle may have any desired shape, but is typically an essentially circular opening. The shape of the print head and the print head orifice may define the shape of the printed material strand. In various embodiments, the print head and/or its orifice are designed such that due to the shear forces that act on the printable composition during transport and extrusion/printing, the viscosity is lowered to such a degree that the composition is printable with the selected device but increases once the layer has been formed such that the formed object retains its form even before curing is completed. The printing method may include heating the composition and/or the printhead. Typical composition temperatures for printing/extrusion range from about 10°C to about 120°C, typically from about 20 to about 100°C. In some embodiments, temperatures in the range of 20 to 40 or 55 to 85°C may be preferred. These conditions particularly apply to the compositions described in more detail below.

The reservoir may be a cartridge, tank or similar storage container in which the printable composition is stored and which is connected to the print head with a suitable feeding line, tubing or the like. The transport of the printable material may be facilitated by a transporting device, such as a pump or conveyor screw, all of which are known in the field.

The print head is designed such that it allows printing the printable composition with the print head in form of extrudate strands onto the carrier substrate to form a first layer in the next step of the inventive method. For this, as already described above, the print head, the carrier substrate or both may be movable. Typically, the print head is moved over the carrier substrate and extrudate strands are deposited onto the substrate in the desired pattern. The layers are formed by depositing strands next to each other. Once the first layer is formed, the method continues by printing the

printable composition with the print head in form of extrudate strand onto the first layer to form a second layer. The second layer may be similar to or different in shape relative to the first layer but is formed on top of the first layer. To form the three-dimensional object, the steps of forming a layer on top of the already formed layers may be repeated to form a third, fourth, fifth and subsequent layer. Computer programs exist that allow to devise a layer-by-layer printing process for a given shape or object.

In various embodiments, the curing mechanism is selected from light or UV radiation, preferably UV radiation. In some embodiments, the printable compositions used may be dual curable compositions and may include another curing mechanism aside from radiation, such as moisture curing or heat curing. Dual curable compositions, such as radiation/moisture and radiation/heat curable compositions may be preferred.

The source of radiation is preferably a light or UV light source, more preferably a UV light source. Said radiation source may be connected to the print head, for example such that it allows to irradiate the printed material. In some embodiments, it may be connected to the print head such that it is movable together with the print head, with the print head and the radiation source being arranged such that the printed layers or strands are exposed to the radiation emitted from the radiation source. In alternative embodiments, the radiation source is fixed and arranged independently from the print head. In still other embodiments, the radiation source is movable independently from the print head.

The exposure of the print head orifice and the radiation curable composition exiting the print head orifice to the radiation can be avoided by shielding the orifice of the print head, the printable and radiation curable composition exiting the print head orifice and an area around the print head orifice from the radiation. Said shielding can, for example, be achieved by arranging the radiation source such that the print head itself blocks radiation in that it shades its orifice and the composition strand exiting the orifice from the radiation emitted by the radiation source. In other embodiments, the shielding is achieved by a device that shields the print heads orifice and the extrudate strand exiting the orifice from the radiation emitted by the radiation source. Said device may be connected to the print head or the radiation source and is arranged such that it prevents exposure of the print head orifice and the extrudate strand exiting the orifice to the radiation. The device is made of a material that blocks the radiation and is preferably inert to the radiation. It can be made of metal, glass or plastic and may be colored. The shielding may be achieved by shading the respective area from light or UV light emitted from the radiation source. The device may have any form and shape, but is formed such that it provides a radiation shielded area of the desired size and shape in a given arrangement of print head and radiation source. I various embodiments, the device is adjustable in size and/or position to adjust to the size and/or position and/or type of radiation source used and the type of the printable and radiation curable composition.

In some embodiments, the device may be a flat disk or slap, for example made of plastic, that is connected to the print head, for example by use of an adhesive.

The radiation may be additionally blocked in an area around the print head orifice. This area around the print head orifice shielded from the radiation may be sized such that the printable and radiation curable composition is only exposed to the radiation once it has formed the layer. In various embodiments, the radiation shielded area around the print head orifice has a diameter about 1 to 5 times the thickness of the printed layer. The area may be essentially circular. In preferred embodiments, it covers the print head orifice, the extrudate strand exiting the orifice and part of the already deposited composition strand. The part of the already deposited extrudate strand on top of the carrier substrate or an already formed layer that is shielded from radiation can, in various embodiments, be equal to or up to 10 times, preferably equal to or up to 5 times, up to 3 times or up to 2 times greater in length (in longitudinal direction) than the thickness of the strand.

The printable compositions are reactive composition in that they are radiation curable. The printable compositions are preferably polymer-based compositions, i.e. one essential component is a polymer. "Essential component", as used in this context, means that said component forms at least 25 wt.-% of the respective composition, preferably at least 40 wt.-%, more preferably at least 50 wt.-%. In various embodiments, the printable composition comprises a polymer base material selected from the group consisting of epoxides, polyurethanes, acrylates, silanes, silane-modified polymers (SMPs) and combinations thereof. If polymer types that do not naturally include radiation curable groups, such as epoxide or vinyl groups, are used, said polymers are modified such that they comprise radiation curable moieties. More concrete examples of such polymeric compositions are described below.

In preferred embodiments of the invention, the printable compositions are in form of a printable paste. "Paste" and "pasty", as used herein, relate to liquid compositions as described in more detail herein. The pastes are preferably shear-thinning and/or thixotropic liquids, i.e. their viscosity is decreased when subjected to shear forces. The pastes typically have a yield point, i.e. at room temperature (20°C) and standard pressure (1013 mbar) they substantially do not flow or creep as long as there are no external forces applied, such as shear forces. Such a yield point ensures that the material once extruded to form a 3D object is stable enough to maintain the form until curing is completed.

The decrease in viscosity upon application of shear stress is such that they are printable/extrudable by 3D printing apparatuses and print heads, as described herein. This may, for example, mean that when subjected to shear forces the ratio of the viscosity of the composition at a shear rate of 1/s to the viscosity at a shear rate of 5/s at 25°C is at least 2.0, preferably 2.5 or more, more preferably 3.0 or more. In various embodiments, the printable compositions

of the invention show shear-thinning/thixotropic behaviour when subjected to shear forces such that the ratio of the viscosity of the composition at a shear rate of 1/s to the viscosity at a shear rate of 10/s at 25°C is at least 2, preferably 4.0 or more, more preferably 5.0 or more. In various embodiments, the compositions of the invention show shear-thinning/thixotropic behaviour when subjected to shear forces such that the ratio of the viscosity of the composition at a shear rate of 1/s to the viscosity at a shear rate of 40/s at 25°C is at least 5.0, preferably 7.0 or more, more preferably 10.0 or more. Viscosities as described herein if not explicitly indicated otherwise, are determined using MCR302 rheometer from Anton-Paar GmbH using the method as set forth in BS EN ISO 3219:1995. Specifically, the measuring conditions are as follows: Geometry: 25mm plate/plate geometry; Gap: 0,25mm, F=0N, under nitrogen, 25°C, Shear rate 0.3-40s$^{-1}$. For extrapolation Casson's model is used.

While there is principally no upper limit, it may be preferred that the shear-thinning/thixotropic properties are not such that the ratio of the viscosity of the composition at a shear rate of 1/s to the viscosity at a shear rate of 10/s at 25°C exceeds 100, preferably not exceeds 50, more preferably not exceeds 30.

It may furthermore be a property of the printable compositions used in accordance with the invention that they have a yield stress (Casson yield stress (value)) of greater than 25, preferably 50 or more, more preferably 75 or more. Even more preferred are values exceeding 100, exceeding 150 or exceeding 200. These values refer to the respective values at 25°C.

The yield stress can be calculated using the formula:

$$\tau^{\frac{1}{2}} = k_{oc}^{\frac{1}{2}} + k_c^{\frac{1}{2}} \gamma^{\frac{1}{2}}$$

Wherein $\tau$ is the shear stress, $k_{oc}$ is the Casson yield stress, $k_c$ is the Casson plastic viscosity and $\gamma$ is the shear rate. In a graphic representation of the square root of $\tau$ (shear stress) against the square root of $\gamma$ (shear rate), the square root of $k_c$ is thus the slope and the square root of $k_{oc}$ the intercept.

Shear rate and shear stress are measured/determined using BS EN ISO 3219:1995. Specifically, the measuring conditions are as follows: Geometry: 25mm plate/plate geometry; Gap: 0,25mm, F=0N, under nitrogen, 25°C, Shear rate 0.3-40s$^{-1}$. For extrapolation Casson's model can be used.

The plastic viscosity preferably ranges between 1 and 30.

The desired rheological properties of the compositions can be controlled via the amounts of components, e.g. as defined below, in particular the type and amounts of fillers used.

In various embodiments, the print head forms part of a printing apparatus and is connected to at least one reservoir of at least one printable composition. The print head may, in various embodiments, be connected to multiple reservoirs of different printable compositions. The print head is typically connected to a feeding means through which the print head is fed with the printable compositions, such as a pump, conveyor and the like, via tubing/pipes. The print head has an orifice or nozzle through which the printable composition leaves the print head and is deposited on a surface. The orifice/nozzle may have any desired shape, but is typically an essentially circular opening. The shape of the print head and the print head orifice may define the shape of the printed material, which is typically in form of a filament or strand. In various embodiments, the print head and/or its orifice are designed such that due to the shear forces that act on the printable composition during transport and extrusion/printing, the viscosity is lowered to such a degree that the composition is printable with the selected device but increases once the layer has been formed such that the formed object retains its form even before curing is completed. The printing method may include heating the composition and/or the printhead. Typical composition temperatures for printing/extrusion range from about 10°C to about 120°C, typically from about 20 to about 100°C. In some embodiments, temperatures in the range of 20 to 40 or 55 to 85°C may be preferred. These conditions particularly apply to the compositions described in more detail below.

The reservoir may be a cartridge, tank or similar storage container in which the printable composition is stored and which is connected to the print head with a suitable feeding line, tubing or the like. The transport of the printable material may be facilitated by a transporting device, such as a pump or conveyor screw, all of which are known in the field.

As described above, the printable compositions may be polymeric compositions that comprise at least one polymer selected from the group of epoxides, acrylates, polyurethanes, polyethers, polyesters, silanes, silane-modified polymers and combinations thereof, including hybrid polymers, as long as they contain at least one radiation curable functional group, such as an epoxy or vinyl group.

*Epoxides*

In various embodiments, the polymeric compositions comprise epoxides or are based on epoxides.

As a first component an epoxy-based reactive polymeric composition comprises at least one epoxy resin. A

large number of polyepoxides which have at least two 1,2-epoxy groups per molecule are suitable as epoxy resins. The epoxy equivalent of said polyepoxides may vary between 100 g/mol and 50000 g/mol, preferably between 110 g/mol and 5000 g/mol, more preferably between 130 g/mol and 2000 g/mol. The epoxy equivalent can be determined according to DIN 16945.The polyepoxides may in principle be saturated, unsaturated, cyclic or acyclic, aliphatic, alicyclic, aromatic or heterocyclic polyepoxide compounds.

Examples of suitable polyepoxides include the polyglycidyl ethers, which are prepared by reacting epichlorohydrin or epibromohydrin with a polyol, like polyphenol in the presence of alkali. Polyphenols suitable for this are for example resorcinol, catechol, hydroquinone, bisphenol A (bis-(4-hydroxyphenyl)-2,2-propane)), bisphenol F (bis-(4-hydroxyphenyl)methane), bis-(4-hydroxyphenyl)-1,1-isobutane, 4,4'-dihydroxybenzophenone, bis-(4-hydroxyphenyl)-1,1-ethane, 1,5-hydroxynaphthalene. Other suitable polyphenols as a basis for the polyglycidyl ethers are the known condensation products of phenol and formaldehyde or acetaldehyde of the novolac resin type. Further polyepoxides which are suitable in principle are the polyglycidyl ethers of polyalcohols or diamines. These polyglycidyl ethers are derived from polyalcohols such as ethylene glycol, diethylene glycol, triethylene glycol, 1,2-propylene glycol, 1,4-butylene glycol, triethylene glycol, 1,5-pentanediol, 1,6-hexanediol or trimethylolpropane. Further polyepoxides are polyglycidyl esters of polycarboxylic acids, for example reaction products of glycidol or epichlorohydrin with aliphatic or aromatic polycarboxylic acids such as oxalic acid, succinic acid, glutaric acid, terephthalic acid or dimer fatty acid. Further epoxides may be derived from the epoxidation products of olefinically unsaturated cycloaliphatic compounds or from natural oils and fats.

In one embodiment, aliphatic epoxy resins, especially cycloaliphatic epoxy resins are preferred. Aliphatic epoxy resin, which include cyclic or acyclic resins, are especially preferred for application temperatures in the range of 15 to 40°C, with cycloaliphatic epoxy resins are particularly preferred under such circumstances. In preferred embodiments, the epoxy polymeric composition comprises at least one epoxy resin containing at least two 3,4-epoxycyclohexane groups, such as (3',4'-epoxycyclohexane)methyl-3,4-epoxycyclohexylcarboxylate and (3',4'-epoxycyclohexane)methyl-3,4-epoxycyclohexylcarboxylate modified epsilon-caprolactone.

In another embodiment, the printable composition contains at least one aromatic epoxy resin, preferably selected from epoxy resins based on bisphenol or epoxy resins based on novolac resins, in particular phenol-formaldehyde resins, or mixtures thereof. In a preferred embodiment the pasty composition includes at least one epoxy resin based on Bisphenol A and/or Bisphenol F. These aromatic epoxy resins are especially preferred for application temperatures in the range from 40 to 80°C.

Typically, the amount of the at least one epoxy resin in a polymeric composition based on such resins is in the range from 2 to 50 % by weight of the entire printable composition, preferably 5 to 45 % by weight, in particular 10 to 40 % by weight, particularly preferably 15 to 35 -% by weight.

Additionally, the printable epoxy composition may contain at least one monomer and/or prepolymer that is polymerizable by exposure to radiation. The monomers and/or prepolymers polymerizable by exposure to radiation are those comprising reactive end groups selected from the group consisting of acrylates, methacrylates, alpha-olefins, N-vinyls, acrylamides, methacrylamides, styrenics, 1,3-dienes, vinyl halides, acrylonitriles, vinyl esters, maleimides, and vinyl ethers. Preferably the monomers and/or prepolymers polymerizable by exposure to radiation contain a carbon-carbon double bond. In the most preferred embodiment the monomer and/or prepolymer that is polymerizable by exposure to radiation is selected from the group of acrylates and/or methacrylates (herein also described as (meth)acrylates), including poly(meth)acylates, such as low-molecular-weight poly(meth)acrylates.

"Poly(meth)acrylate" shall be understood to mean a compound that comprises at least two acrylate groups. "Low-molecular-weight", as used in this context, shall be understood to refer to a compound that has a molecular weight of less than 2400 g/mol, and preferably less than 800 g/mol. Monomers and/or prepolymers polymerizable by exposure to radiation comprising two, three or more acrylate groups per molecule may be advantageous under certain circumstances, for example a combination of di- and tri(meth)acrylates.

Exemplary difunctional (meth)acrylates include, without limitation, ethylene glycol dimethacrylate, diethylene glycol dimethacrylate, triethylene glycol dimethacrylate, triethylene glycol diacrylate, tripropylene glycol dimethacrylate, 1,4-butanediol dimethacrylate, 1,3-butylene glycol dimethacrylate, 1,3-butanediol dimethacrylate, tricyclodecane dimethanol dimethacrylate, 1,10-dodecanediol dimethacrylate, 1,6-hexanediol dimethacrylate, 2-methyl-1,8-octanediol dimethacrylate, 1,9-nonanediol dimethacrylate, neopentyl glycol dimethacrylate and polybutylene glycol dimethacrylate. Difunctional (meth)acrylates based on a phenol structure, like bisphenol, are also suitable. Especially preferred are epoxylated bisphenol A and/or F di(meth)acrylates.

Exemplary (meth)acrylates comprising three or more acrylate groups include, without limitation, glycerol triacrylate, dipentaerythritol hexaacrylate, pentaerythritol triacrylate (TMM), tetramethylolmethane tetraacrylate (TMMT), trimethylolpropane triacrylate (TMPTA), pentaerythritol tetraacrylate, di(trimethylolpropane) tetraacrylate (TMPA), pentaerythritol tetraacrylate, trimethylolpropane trimethacrylate (TMPTMA), tri(2-acryloxyethyl) isocyanurate and tri(2-methacryloxyethyl) trimellitate.

Printable compositions comprising at least one poly(meth)acrylate selected from triethylene glycol diacrylate,

triethylene glycol dimethacrylate, difunctional (meth)acylate based on a phenol structure, especially epoxylated bisphenol A diacylate, trimethylolpropane triacrylate (TMPTA) and trimethylolpropane trimethacrylate (TMPTMA), pentaerythritol triacrylate (TMM), tetramethylolmethane tetraacrylate (TMMT), pentaerythritol trimethacrylate, di(trimethylolpropane) tetraacrylate (TMPA) and pentaerythritol tetraacrylate can be preferred.

In various embodiments, the at least one monomer and/or prepolymer that is polymerizable by exposure to radiation, preferably a poly(meth)acrylate, is comprised in an amount of 1 to 30 wt.%, preferably 5 to 20 wt.%, based on the total weight of the printable epoxy composition.

Furthermore, the epoxy reactive compositions may comprise at least one photoinitiator, as described below. The epoxy compositions contain the photoinitiators preferably in an amount of from about 0.01 to 5.0 % by weight, preferably 0.1 to 4.0 % by weight, more preferably 0.5 to 3 % by weight, based in each case on the total weight of the composition. If a mixture of different photoinitiators is used, the amounts refer to the total amount in the composition.

In various embodiments, the printable epoxy composition may further comprise an epoxy curing catalyst. Suitable epoxy curing catalysts are well-known in the art and include cationic curing catalysts and latent curing catalysts.

The cationic curing catalysts may be one of the catalysts commonly used for the cationic polymerizations including onium salts with anions of low nucleophility, such as ammonium salts, halonium salts, iodonium salts, sulfonium salts, sulfoxonium salts or diazonium salts. Suitable anions include for example hexafluoroantimonate, hexafluorophosphate or tetrakis(pentafluorophenyl) borate. Preferred are sulfonium and iodonium salts, wherein the counter ion is selected from hexafluoroantimonate, hexafluorophosphate and tetrakis(penta fluoro aryl) borates, especially triaryl sulfonium and bis (alkylphenyl) iodonium salts with hexafluoroantimonate as a counter ion, particularly preferably Triarylsulfonium hexafluoroantimonate salts. Especially preferred are cationic curing catalysts based on hexafluoroantimonate. These cationic curing catalysts are preferably combined with an aliphatic, especially cycloaliphatic epoxy resin.

The epoxy compositions may contain the cationic curing catalyst preferably in an amount of from about 0.01 to 5.0 % by weight, preferably 0.1 to 4.0 % by weight, more preferably 0.5 to 2 % by weight, based in each case on the total weight of the composition.

In some embodiments, the epoxy composition comprises a latent hardener as epoxy curing catalyst, especially in combination with aromatic epoxy resins. As heat-activatable or latent curing catalyst for the epoxy resin use may be made of guanidines, substituted guanidines, substituted ureas, melamine resins, guanamine derivatives, cyclic tertiary amines, aromatic amines and/or mixtures thereof. The curing agents may be stoichiometrically included in the curing reaction. However, they may also be catalytically active. Examples of substituted guanidines are methyl guanidine, dimethyl guanidine, trimethyl guanidine, tetramethyl guanidine, methyl isobiguanidine, dimethyl isobiguanidine, tetramethyl isobiguanidine, hexamethyl isobiguanidine, heptamethyl isobiguanidine and, most particularly, cyanoguanidine (dicyanodiamide). As representatives of suitable guanamine derivatives, mention may be made of alkylated benzoguanamine resins, benzoguanamine resins or methoxymethyl ethoxymethyl benzoguanamine. Dicyandiamide is particularly suitable.

The epoxy compositions may contain the latent curing catalyst preferably in an amount of from about 0.01 to 10 % by weight, preferably 1 to 8 % by weight, more preferably 2 to 7 % by weight, based in each case on the total weight of the composition.

In addition to or instead of the aforementioned curing catalyst, use may be made of catalytically active substituted ureas. These are, in particular, p-chlorophenyl-N,N-dimethyl urea (Monuron), 3-phenyl-1,1-dimethyl urea (Fenuron) or 3,4-dichlorophenyl-N,N-dimethyl urea (Diuron). In principle, use may also be made of catalytically active tertiary acryl- or alkylamines, such as for example benzyl dimethyl amine, tris(dimethylamino)phenol, piperidine or piperidine derivatives. Furthermore, use may also be made of various, preferably solid, imidazole derivatives as catalytically active accelerators. As representatives, mention may be made of 2-ethyl-2-methylimidazole, N-butylimidazole, benzimidazole and N-C1-12-alkylimidazoles or N-arylimidazoles. Particular preference is given to the use of a combination of curing agent and accelerator in the form of so-called accelerated dicyandiamides in finely ground form. Especially preferred is a combination of dicyandiamide and fenuron.

In some embodiments, the printable composition may contain additionally a dual reactive compound. In general, such a dual reactive compound comprises: (i) a first reactive group reactive with the monomers and/or prepolymers that are polymerizable by exposure to radiation, and (ii) a second reactive group reactive with the epoxy resin. One or more of each reactive group may be included.

Examples of suitable first reactive groups include, but are not limited to, acrylates, methacrylates, alpha-olefins, N-vinyls, acrylamides, methacrylamides, styrenics, thiols, 1,3- dienes, vinyl halides, acrylonitriles, vinyl esters, maleimides and vinyl ethers. Examples of suitable second reactive groups include, but are not limited to, epoxy, amine, isocyanate, alcohol and anhydride groups.

Thus, particular examples of suitable dual reactive compounds include compounds of the general formula $(X)_nR(X')_m$, wherein: X is the first reactive group, X' is the second reactive group, n and m are each integers of from 1 or 2 to 10 or 20, and R is a hydrocarbyl or organic group (e.g., an aromatic, aliphatic, or mixed aromatic and aliphatic group, such as bisphenol A). Particular examples include but are not limited to epoxy acrylates and epoxy methacrylates.

In a preferred embodiment, the dual reactive compound, preferably an epoxy (meth)acrylate, is comprised in an amount of 1 to 20 wt.%, preferably 5 to 15 wt.%. based on the total weight of the printable composition.

In various embodiments, the epoxy composition comprises at least one compound having at least one oxetane group, preferably 1 to 4, in particular 1 to 2, particularly preferably exactly two oxetane groups per molecule. "Oxetane group" as used herein refers to a four-membered ring having an oxygen atom. In addition to the oxetane group, these compounds may also have at least one hydroxyl group, preferably 1 to 4, in particular 1 to 2, particularly preferably exactly one hydroxyl group per molecule. The compound having at least one oxetane group is preferably a monomeric compound. The at least one compound having at least one oxetane group preferably has a molecular weight of less than 1000 g / mol, preferably less than 500 g / mol, preferably less than 400 g / mol. Preferred examples of such compounds include tetraphthalate-bisoxetane, and biphenylene-bisoxetane.

In various embodiments, the oxetane is comprised in an amount of 1 to 20 wt.%, preferably 5 to 15 wt.%. based on the total weight of the printable epoxy composition.

In various embodiments, the epoxy composition contains at least one organic hardener copolymerizable with said epoxy resin. Any suitable hardener for epoxy resins may be used. In some embodiments, the hardener is selected from an amine, a polyamine (e.g., an aromatic amine or polyamine, a cycloaliphatic amine or polyamine, an aliphatic amine or polyamine such as a polyether amine), an acid, polyacid (i.e. polycarboxylic acids), an anhydride, an alcohol, an polyol, a thiol or a polythiol. Especially preferred are alcohols and polyols, in particular containing primary hydroxyl groups. These preferably have a functionality of at least 1, preferably at least 2, are preferably free from groups that can inhibit the curing reaction and preferably only contain OH groups as reactive groups. The alcohol can be aliphatic or aromatic compounds. Examples are polyester polyols, polyether polyols and polyester/polyether polyols, hydroxyl-functionalized polybutadienes, polycaprolactone diols or triols, and ethylene/butylene polyols. The used alcohols, preferably polyols used as hardener may have a number-average molecular weight of 200 to 5000, preferably 300 to 2500 g/mol (determinable by means of GPC against a polystyrene standard).

In various embodiments, the organic hardener, preferably a polyol, is comprised in an amount of 1 to 20 wt.%, preferably 5 to 15 wt.%. based on the total weight of the printable composition.

The epoxides are radiation curable and preferably dual curable, such as heat and radiation curable, as defined above.

The printable epoxy compositions preferably have a viscosity factor (1,5/15) at application temperature of at least 2.0, preferably at least 3.0, more preferably 4.0 or more. Such a viscosity factor (1,5/15) ensures that the material once extruded to form a 3D object is stable enough to maintain the form until curing is completed. The viscosity factor (x/y) is the viscosity ratio of the viscosity of the composition at a shear rate of x/s to the viscosity at a shear rate of y/s at application temperature. Therefore, the viscosity factor (1,5/15) is the viscosity of the composition at a shear rate of 1,5/s divided by the viscosity at a shear rate of 15/s. Viscosities as described herein if not explicitly indicated otherwise, are determined using MCR302 rheometer from Anton-Paar GmbH using the method as set forth in BS EN ISO 3219:1995. Specifically, the measuring conditions are as follows: Geometry: 25mm plate/plate geometry; Gap: 0,2mm, F=0N, under nitrogen, 25°C, Shear rate 0.3 to 40 1/s. To determine the viscosity factor (1,5/15) the formulation is kept for 30 sec under constant shear of $1.5s^{-1}$, followed by 30 sec of constant shear with $15s^{-1}$, both in rotation mode. The viscosity factor (1,5/15) is determined by dividing the two plateau values of the viscosities at the two shear rates. The other viscosity factors can be determined accordingly.

In various embodiments, the printable compositions have a viscosity factor (1,5/15) at a temperature in the range of 15°C to 40°C, preferably 20°C to 30°C, more preferably at 25°C of at least 2.0, preferably at least 3.0, more preferably 4.0 or more. In other embodiments, the printable compositions have a viscosity factor (1,5/15) at a temperature in the range of 40°C to 80°C, preferably 45°C to 60°C, more preferably at 55°C of at least 2.0, preferably at least 3.0, more preferably 4.0 or more.

In other embodiments, the pasty epoxy composition has also a viscosity factor (5/50) at application temperature, preferably at 25°C or 55°C, of at least 1.5, preferably at least 2.0, more preferably at least 3.0. Pasty epoxy compositions which have the desired value of this additional second viscosity factor (5/50) show a beneficial thixotropic behaviour. Especially preferred are compositions with a viscosity factor (1,5/15) greater than the viscosity factor (5/50) at application temperature, preferably at 25°C or at 55°C.

While there is principally no upper limit, it may be preferred that the viscosity factor (1,5/15) and/or the viscosity factor (5/50) at the mentioned application temperature do not exceed 100, preferably 50, more preferably 30.

In preferred embodiments, the pasty epoxy composition has a viscosity at a shear rate of 1,5/s of at least 10 Pas, preferably at least 20 Pas, more preferably at least 30 Pas. In other embodiments, the pasty epoxy composition has a viscosity at a shear rate of 1,5/s of at most 2000 Pas, preferably at most 1500 Pas, more preferably at most 1300 Pas. Preferably the pasty epoxy composition has a viscosity at a shear rate of 1,5/s in the range from 10 to 2000 Pas, preferably from 20 to 1500 Pas, more preferably from 30 to 1300 Pas.

It is understood that the above viscosity factors that are, in various embodiments, preferred for the epoxy compositions disclosed herein may, in certain embodiments, replace the more general shear-thinning/thixotropy and

yield stress definitions above. In other embodiments, all rheology requirements set out herein are satisfied by the epoxy compositions.

*Acrylates*

In various embodiments, the polymeric compositions comprise acrylates or are based on acrylates.
"Acrylates", as used in this context, relates to polymers that have a poly(meth)acrylic acid (ester) backbone, i.e. that result from polymerization of acrylic acid (esters) and/or methacrylic acid (esters), typically C1-C10 alkyl esters thereof.
The acrylates are radiation curable in that they comprise at least one radiation curable group, as described herein.

*Polyurethanes*

In various embodiments, the polymeric compositions comprise polyurethanes or are based on polyurethanes.
A "polyurethane" is understood to be a polymer which has at least two urethane groups -NH-C(=O)-O-in the main chain. Polyurethanes may be obtainable by reacting at least i) a polyol or a mixture of two or more polyols and ii) a polyisocyanate or a mixture of two or more polyisocyanates.
As first component such polyurethane compositions comprise at least one polyisocyanate.
A "polyisocyanate" is understood to be a compound which has at least two isocyanate groups -NCO. This compound does not have to be a polymer, and instead is frequently a low molecular compound.
The polyisocyanates suitable for preparing the polyurethanes include ethylene diisocyanate, 1,4-tetramethylene diisocyanate, 1,4-tetramethoxybutane diisocyanate, 1,6-hexamethylene diisocyanate (HDI), cyclobutane-1,3-diisocyanate, cyclohexane-1,3- and -1,4-diisocyanate, bis(2-isocyanatoethyl)fumarate, 1-isocyanato-3,3,5-trimethyl-5-isocyanatomethylcyclohexane (isophorone diisocyanate, IPDI), 2,4- and 2,6-hexahydrotoluylene diisocyanate, hexahydro-1,3- or -1,4-phenylene diisocyanate, benzidine diisocyanate, naphthalene-1,5-diisocyanate, 1,6-diisocyanato-2,2,4-trimethylhexane, 1,6-diisocyanato-2,4,4-trimethylhexane, xylylene diisocyanate (XDI), tetramethylxylylene diisocyanate (TMXDI), 1,3- and 1,4-phenylene diisocyanate, 2,4- or 2,6-toluylene diisocyanate (TDI), 2,4'-diphenylmethane diisocyanate, 2,2'-diphenylmethane diisocyanate, or 4,4'-diphenylmethane diisocyanate (MDI), and the isomeric mixtures thereof. Also suitable are partially or completely hydrogenated cycloalkyl derivatives of MDI, for example completely hydrogenated MDI (H12-MDI), alkyl-substituted diphenylmethane diisocyanates, for example mono-, di-, tri-, or tetraalkyldiphenylmethane diisocyanate and the partially or completely hydrogenated cycloalkyl derivatives thereof, 4,4'-diisocyanatophenylperfluorethane, phthalic acid-bis-isocyanatoethyl ester, 1 chloromethylphenyl-2,4- or -2,6-diisocyanate, 1-bromomethylphenyl-2,4- or -2,6-diisocyanate, 3,3'-bis-chloromethyl ether-4,4'-diphenyl diisocyanate, sulfur-containing diisocyanates such as those obtainable by reacting 2 moles diisocyanate with 1 mole thiodiglycol or dihydroxydihexyl sulfide, diisocyanates of dimer fatty acids, or mixtures of two or more of the named diisocyanates.
Other polyisocyanates suitable include isocyanates with a functionality of three or more obtainable, for example, by oligomerization of diisocyanates, more particularly by oligomerization of the isocyanates mentioned above. Examples of such tri- and higher isocyanates are the triisocyanurates of HDI or IPDI or mixtures thereof or mixed triisocyanurates thereof and polyphenyl methylene polyisocyanate obtainable by phosgenation of aniline/formaldehyde condensates.
The polyisocyanate is preferably an aliphatic polyisocyanate, more preferably a polyisocyanate based on or being hexamethylene diisocyanate.
Typically, the amount of the at least one polyisocyanate is in the range from 2 to 50 % by weight of the printable composition, preferably 5 to 45 % by weight, in particular 10 to 40 % by weight, particularly preferably 15 to 30 -% by weight.
In various embodiments, the polyisocyanate described above is combined with a compound having NCO-reactive groups, such as amine or hydroxy groups. In various embodiments, these compounds are polyols, as defined below, such as polyether polyols, polyester polyols, polycarbonates and the like. If reacted with a molar excess of NCO groups relate to the NCO-reactive groups present in these compounds, NCO-terminated polyurethane compounds, such as (pre)polymers are obtained.
For polyurethane synthesis, there may thus be a stoichiometric excess of NCO groups of the polyisocyanates with respect to the hydroxy groups of the polyols, "the polyols" and "the polyisocyanates" in each case also encompassing the presence of only one polyol and/or only one polyisocyanate. This stoichiometric excess must exist under the process conditions; i.e., it is not sufficient when the excess is nominally present, but a portion of the NCO groups of the polyisocyanates reacts with reactants other than the OH groups of the polyols, for example with monofunctional alcohols, so that there is a de facto shortage of NCO groups of the polyisocyanates with respect to the OH groups of the polyols. The ratio of the number of OH groups of the polyols to the number of NCO groups of the polyisocyanates is particularly preferably 1:3 to 1:1.1, in particular 1:2.5 to 1:1.5.
The afore-mentioned polyurethanes synthesized may be used as a basis of the polyurethane compositions

described herein. In various embodiments, these polyurethanes of the invention make up 2 to 50 % by weight of the printable composition, preferably 5 to 45 % by weight, in particular 10 to 40 % by weight, particularly preferably 15 to 30 -% by weight. It is understood that the compositions then contain these polyurethanes and only residual amounts of the polyisocyanates.

In various embodiments, the polyurethane compositions contain at least one polyol. As defined below, "polyol" is understood to be a compound which contains at least two OH groups, irrespective or whether the compound contains other functional groups. However, a polyol used in accordance with this definition preferably contains only OH groups as functional groups or, if other functional groups are present, none of these other functional groups is reactive at least to isocyanates under the conditions prevailing during the reaction of the polyol(s) and polyisocyanate(s).

The polyols suitable generally include polyether polyols, polyester polyols, polycarbonates and the like, but are preferably polyether and/or polyester polyols. The polyether polyol is preferably a polyalkylene oxide, particularly preferably polyethylene oxide and/or polypropylene oxide. The number average molecular weight Mn of suitable polyethers and/or polyesters on which the polymer is based is preferably 200 to 30000 g/mol.

The polyols to be used may have an OH value of preferably about 5 to about 15 and, more preferably, of about 10. The percentage content of primary OH groups should be below about 20%, based on all the OH groups, and is preferably below 15%. In one particularly advantageous embodiment, the acid value of the polyethers used is below about 0.1, preferably below 0.05 and, more preferably, below 0.02.

Besides the polyethers, a polyol mixture that may contain other polyols can be used. For example, it may contain polyester polyols with a molecular weight of about 200 to about 30,000.

In a preferred embodiment, the polyol, preferably a polyester polyol, is comprised in an amount of 1 to 20 wt.%, preferably 2 to 10 wt.%, based on the total weight of the printable composition.

The polyol may react with the polyisocyanate to form the polyurethane in situ or upon application or may be pre-reacted with the polyisocyanate to yield a polyurethane. In the latter case, the composition may comprise a polyurethane that has been formed by reaction of the polyisocyanate and polyol as described above. It is understood that if the compositions contain such polyurethanes, then the combined amounts listed above for the polyisocyanates and polyols relate to the polyurethanes formed therefrom instead.

Additionally, the printable composition contains at least one monomer and/or prepolymer that is polymerizable by exposure to radiation. The monomers and/or prepolymers polymerizable by exposure to radiation are those comprising reactive end groups selected from the group consisting of acrylates, methacrylates, alpha-olefins, N-vinyls, acrylamides, methacrylamides, styrenics, 1,3-dienes, vinyl halides, acrylonitriles, vinyl esters, maleimides, and vinyl ethers. Preferably the monomers and/or prepolymers polymerizable by exposure to radiation contain a carbon-carbon double bond. In the most preferred embodiment the monomer and/or prepolymer that is polymerizable by exposure to radiation is selected acrylates and/or methacrylates (herein also described as (meth)acrylates).

In some embodiments, the printable composition comprises a multifunctional (meth)acrylate monomer and/or a monofunctional (meth)acrylate monomer selected from the group consisting of alkyl (meth)acrylate, alkenyl (meth)acrylate and heterocyclic (meth)acrylate, or any combinations of these monomers, wherein the alkyl group has 1 to 20 carbon atoms and it can be further substituted, the alkenyl group has 2 to 20 carbon atoms and it can be further substituted, and the heterocyclic group has 2 to 20 carbon atoms and at least one heteroatom selected from nitrogen and oxygen, and it can be further substituted, wherein the substituent being at least one independently selected from the group consisting of an alkyl group having 1 to 10 carbon atoms, an alkoxy group having 1 to 10 carbon atoms, an aryloxy group having 6 to 10 carbon atoms, an epoxy group, and a hydroxy group; and amine groups.

Preferably the acrylate can be a polybutadiene containing a (meth)acryloxy group, polyisoprene containing a (meth)acryloxy group, polyurethane containing a (meth)acryloxy group and polyester containing a (meth)acryloxy group, or any combinations thereof. In a preferred embodiment, the monomer and/or prepolymer that is polymerizable by exposure to radiation can be polyurethane containing a (meth)acryloxy group; more preferably an aliphatic polyurethane containing a (meth)acryloxy group.

In a more preferred embodiment, the at least one monomer and/or prepolymer that is polymerizable by exposure to radiation is a dual reactive compound. In general, such a dual reactive compound comprises:

(i) a first reactive group polymerizable by exposure to radiation, as mentioned above, and

(ii) a second reactive group reactive with the polyisocyanate resin. One or more of each reactive groups may be included. Examples of suitable second reactive groups include, but are not limited to, hydroxyl, amine and thiol groups, preferably hydroxyl groups. Especially preferred are (meth)arcylates with at least one hydroxyl group as dual reactive compound. Examples include hydroxylalkyl(meth)acrylates, preferably with a C1 to C12 alkyl group. Especially preferred is hydroxyethyl(meth)acrylate.

In a preferred embodiment, the at least one monomer and/or prepolymer that is polymerizable by exposure to radiation, preferably a (meth)acrylate, preferably a (meth)acrylate containing at least one hydroxyl group, is comprised

in an amount of 1 to 30 wt.%, preferably 5 to 20 wt.%, based on the total weight of the printable composition.

Furthermore, the polyurethane compositions may comprise at least one photoinitiator, as described below. The epoxy compositions contain the photoinitiators preferably in an amount of from about 0.01 to 5.0 % by weight, preferably 0.1 to 4.0 % by weight, more preferably 0.5 to 3 % by weight, based in each case on the total weight of the composition. If a mixture of different photoinitiators is used, the amounts refer to the total amount in the composition.

In various embodiments, the printable polyurethane composition may comprise an isocyanate curing catalyst, especially in case the printable compositions contain a polyol. Suitable isocyanate curing catalysts are well-known in the art and include tin compounds, preferably an organotin compound or an inorganic tin salt. Tin in these tin compounds is preferably bivalent or tetravalent. Suitable inorganic tin salts are, for example, tin(II) chloride and tin(IV) chloride. Organotin compounds (tin organyles) are used preferably as the tin compounds, however. Suitable organotin compounds are, for example, the 1,3-dicarbonyl compounds of bivalent or tetravalent tin, for example, the acetylacetonates such as di(n butyl)tin(IV) di(acetylacetonate), di(n-octyl)tin(IV) di(acetylacetonate), (n-octyl)(n-butyl)tin(IV) di(acetylacetonate); the dialkyl tin(IV) dicarboxylates, for example, di-n-butyltin dilaurate, di n butyltin maleate, di-n-butyltin diacetate, di-n-octyltin dilaurate, di-n-octyltin diacetate, or the corresponding dialkoxylates, for example, di-n-butyltin dimethoxide; oxides of tetravalent tin, for example, dialkyltin oxides, such as, for example, di-n-butyltin oxide and di-n-octyltin oxide; and the tin(II) carboxylates such as tin(II) octoate or tin(II) phenolate.

Also suitable are tin compounds of ethyl silicate, dimethyl maleate, diethyl maleate, dioctyl maleate, dimethyl phthalate, diethyl phthalate, dioctyl phthalate, such as, for example, di(n butyl)tin(IV) di(methyl maleate), di(n-butyl)tin(IV) di(butyl maleate), di(n-octyl)tin(IV) di(methyl maleate), di(n-octyl)tin(IV) di(butyl maleate), di(n-octyl)tin(IV) di(isooctyl maleate); and di(n butyl)tin(IV) sulfide, (n-butyl)2Sn(SCH2COO), (n-octyl)2Sn(SCH2COO), (n octyl)2Sn(SCH2CH2COO), (n-octyl)2Sn(SCH2CH2COOCH2CH2OCOCH2S), (n butyl)2-Sn(SCH2COO-i-C8H17)2, (n-octyl)2Sn(SCH2COO-i-C8H17)2, and (n-octyl)2Sn(SCH2COO-n-C8H17)2.

In some embodiments, the tin compound is selected from 1,3-dicarbonyl compounds of bivalent or tetravalent tin, the dialkyltin(IV) dicarboxylates, the dialkyltin(IV) dialkoxylates, the dialkyltin(IV) oxides, the tin(II) carboxylates, and mixtures thereof.

In various embodiments, the tin compound is a dialkyltin(IV) dicarboxylate, particularly dibutyltin dilaurate or dioctyltin dilaurate.

Suitable catalysts for such reactions are also described below as condensation catalysts.

The polyurethane compositions may contain the polyisocyanate catalyst preferably in an amount of from about 0.001 to 1.0 % by weight, preferably 0.01 to 0,5 % by weight, based in each case on the total weight of the composition.

In various embodiments, the polyurethane compositions may have a viscosity factor (1,5/15) at application temperature of at least 2.0, preferably at least 3.0, more preferably 4.0 or more. Such a viscosity factor (1,5/15) ensures that the material once extruded to form a 3D object is stable enough to maintain the form until curing is completed. The viscosity factor (x/y) is the viscosity ratio of the viscosity of the composition at a shear rate of x/s to the viscosity at a shear rate of y/s at application temperature. Therefore, the viscosity factor (1,5/15) is the viscosity of the composition at a shear rate of 1,5/s divided by the viscosity at a shear rate of 15/s. Viscosities as described herein if not explicitly indicated otherwise, are determined using MCR302 rheometer from Anton-Paar GmbH using the method as set forth in BS EN ISO 3219:1995. Specifically, the measuring conditions are as follows: Geometry: 25mm plate/plate geometry; Gap: 0,2mm, F=0N, under nitrogen, 25°C, Shear rate 0.3 to 40 1/s. To determine the viscosity factor (1,5/15) the formulation is kept for 30 sec under constant shear of 1.5s-1, followed by 30 sec of constant shear with 15s-1, both in rotation mode. The viscosity factor (1,5/15) is determined by dividing the two plateau values of the viscosities at the two shear rates. The other viscosity factors can be determined accordingly.

In various embodiments, the printable compositions have a viscosity factor (1,5/15) at a temperature in the range of 15°C to 40°C, preferably 20°C to 30°C, more preferably at 25°C of at least 2.0, preferably at least 3.0, more preferably 4.0 or more. In other embodiments, the printable compositions have a viscosity factor (1,5/15) at a temperature in the range of 40°C to 80°C, preferably 45°C to 60°C, more preferably at 55°C of at least 2.0, preferably at least 3.0, more preferably 4.0 or more.

In other embodiments, the pasty polyurethane composition has also a viscosity factor (5/50) at application temperature, preferably at 25°C or 55°C, of at least 1.5, preferably at least 2.0, more preferably at least 3.0. Pasty polyurethane compositions which have the desired value of this additional second viscosity factor (5/50) show a beneficial thixotropic behaviour. Especially preferred are compositions with a viscosity factor (1,5/15) greater than the viscosity factor (5/50) at application temperature, preferably at 25°C or at 55°C.

While there is principally no upper limit, it may be preferred that the viscosity factor (1,5/15) and/or the viscosity factor (5/50) at the mentioned application temperature do not exceed 100, preferably 50, more preferably 30.

In preferred embodiments, the pasty polyurethane composition has a viscosity at a shear rate of 1,5/s of at least 10 Pas, preferably at least 20 Pas, more preferably at least 30 Pas. In other embodiments, the pasty polyurethane composition has a viscosity at a shear rate of 1,5/s of at most 2000 Pas, preferably at most 1500 Pas, more preferably at most 1300 Pas. Preferably the pasty polyurethane composition has a viscosity at a shear rate of 1,5/s in the range

from 10 to 2000 Pas, preferably from 20 to 1500 Pas, more preferably from 30 to 1300 Pas.

It is understood that the above viscosity factors that are, in various embodiments, preferred for the epoxy compositions disclosed herein may, in certain embodiments, replace the more general shear-thinning/thixotropy and yield stress definitions above. In other embodiments, all rheology requirements set out herein are satisfied by the epoxy compositions.

*Further radiation and radiation/moisture curable polymers*

The printable compositions may, in various embodiments, comprise radiation curable polymers. These may be selected from the polymers described above and may, in various embodiments, comprise at least one terminal group of the general formula (I)

$$-A^1-C(=O)-CR^1=CH_2 \qquad (I),$$

wherein

$A^1$ is a divalent bonding group containing at least one heteroatom; and
$R^1$ is selected from H and $C_1$-$C_4$ alkyl, preferably H and methyl.

In various embodiments, the polymer backbone of such polymers is selected from the group consisting of polyurethanes, polyethers/polyoxyalkylenes, poly(meth)acrylates, polyesters, polyorganosiloxanes and combinations thereof, as described below.

The presence of the terminal acrylic groups of formula (I) imparts the polymer with radiation curing properties.

To obtain dual radiation/moisture curing properties, the radiation curable polymer can further comprise at least one terminal group of the general formula (II)

$$-A^2-SiXYZ \qquad (II),$$

wherein X, Y, Z are, independently of one another, selected from the group consisting of a hydroxyl group and $C_1$ to $C_8$ alkyl, $C_1$ to $C_8$ alkoxy, and $C_1$ to $C_8$ acyloxy groups, wherein X, Y, Z are substituents directly bound with the Si atom or the two of the substituents X, Y, Z form a ring together with the Si atom to which they are bound, and at least one of the substituents X, Y, Z is selected from the group consisting of a hydroxyl group, $C_1$ to $C_8$ alkoxy and $C_1$ to $C_8$ acyloxy groups; and
$A^2$ is a divalent bonding group containing at least one heteroatom.

In various embodiments, the radiation curable polymer may comprise at least two, for example 2 or 3 or 4 or more terminal groups of the general formula (I). In addition to these, the polymer may further comprise at least one terminal group of formula (II), for example 1, 2 or more. In various embodiments, the polymer may comprise at least one terminal group of formula (I), for example 1, 2 or 3, and at least one terminal group of formula (II), for example 1, 2 or 3. In some embodiments, the polymer is a linear polymer and thus comprises only two terminal groups. These may be of formula (I) or formula (I) and formula (II).

In various embodiments, the radiation curable polymer of the invention comprises 1 to 100 mol-%, preferably 50 to 100 mol-%, of terminal groups of formula (I) and 99 to 0 mol-%, preferably 50 to 0 mol-%, of terminal groups of formula (II). In a linear polymer having one terminal group of formula (I) and one terminal group of formula (II), the mol-% of both groups would thus be 50%. In various embodiments, it may be advantageous that both types of terminal groups are present, as this imparts dual curing properties to the polymer. This is advantageous, as the radiation curing provides a fast curing mechanism important for stability of the printed object directly after printing and the moisture curing provides for a slower curing mechanism that provides the object with the final properties, such as hardness and elasticity. While it is possible to indicate the number of terminal groups of each formula for a single polymer molecule, it is understood that, depending on the process of manufacture, the obtained population of polymers may vary in their structure with regard to the terminal groups, as it may be possible that such a process generates polymer molecules that have only terminal groups of formula (I), polymer molecules that have only terminal groups of formula (II) and polymer molecules that have both types of terminal groups. In such polymer compositions, the above given percentages regarding the percentage of the respective terminal groups still apply but then relate to the total number of terminal groups in the given population of polymer molecules.

Accordingly, in various embodiments, the radiation curable polymer comprises (i) two or three, preferably two, terminal groups of formula (I) or (ii) one terminal group of formula (I) and one or two, preferably one, terminal group of

formula (II), or (iii) two terminal groups of formula (I) and one terminal group of formula (II). Preferably, the polymer is a linear polymer.

In various embodiments, at least one polymer A comprising at least one terminal group of formula (I) may be combined with a second polymer, this at least one second polymer B comprising at least one terminal group of formula (II). The polymer backbone of this at least one polymer B may also be selected from the same group listed above for polymer A, but is independent from the backbone of the polymer A. However, in various embodiments if two different polymers A and B are used in the composition, the backbones may be the same type of polymer backbone. In various embodiments, both polymers have polyether backbones. In other, alternative embodiments, the at least one polymer B has a backbone different from those listed above, such as a polysiloxane backbone, for example a polydimethylsiloxane (PDMS) backbone.

In various embodiments, the divalent linking group $A^1$ and/or $A^2$ comprises a substituted or unsubstituted ether, amide, carbamate, urethane, urea, imino, siloxane, carboxylate, carbamoyl, amidino, carbonate, sulfonate or sulfinate group, preferably a urea and/or urethane group. "Substituted" in relation to these groups means that a hydrogen atom present in these groups may be replaced by a non-hydrogen moiety, such as alkyl, for example $C_{1-4}$ alkyl. While $A^1$ and/or $A^2$ may be any one of the listed groups, in various embodiments, they comprise further structural elements, such as further linking groups that link the listed functional group to the polymer and/or the terminal group.

Generally, in various embodiments, the linking groups $A^1$ and $A^2$ are generated in a capping reaction in which the polymer termini are reacted with a compound results in the terminal groups of formulae (I) and (II). In various embodiments, the polymers are provided in a hydroxyl (OH) terminated form and thus provide reactive groups on their termini that can be used for the capping reaction. In various embodiments, the terminal groups of the polymer backbone, such as hydroxyl groups, may be first functionalized with a polyisocyanate, such as a diisocyanate or triisocyanate, such as those described above, such that an NCO-terminated polymer is generated. This may then in the next step be reacted with an (meth)acrylate/silane that comprises an NCO-reactive group, such as an amino or hydroxyl group, preferably an hydroxy-modified (meth)acrylate and/or an aminosilane. The urethane and urea groups resulting from such a reaction, advantageously increase the strength of the polymer chains and of the overall crosslinked polymer.

With respect to the optional terminal silane group of formula (II), the following applies.

Alkoxysilane-terminated compounds having a methylene group as binding link to the polymer backbone - so-called "alpha-silanes" - have a particularly high reactivity of the terminating silyl group, leading to reduced setting times and thus to very rapid curing of formulations based on these polymers.

In general, a lengthening of the binding hydrocarbon chain leads to reduced reactivity of the polymers. In particular, "gamma-silanes" - which comprise the unbranched propylene residue as binding link - have a balanced ratio between necessary reactivity (acceptable curing times) and delayed curing (open assembly time, possibility of corrections after bonding). By carefully combining alpha- and gamma-alkoxysilane-terminated building blocks, therefore, the curing rate of the systems can be influenced as desired.

The substituents X, Y and Z are, independently of one another, selected from the group consisting of a hydroxyl group and $C_1$ to $C_8$ alkyl, $C_1$ to $C_8$ alkoxy, and $C_1$ to $C_8$ acyloxy groups, wherein at least one of the substituents X, Y, Z here must be a hydrolyzable group, preferably a $C_1$ to $C_8$ alkoxy or a $C_1$ to $C_8$ acyloxy group, wherein the substituents X, Y and Z are directly bound with the Si atom or the two of the substituents X, Y, Z form a ring together with the Si atom to which they are bound. In preferred embodiments, X, Y and Z are the substituents directly bound with the SI atom. As hydrolyzable groups, preferably alkoxy groups, in particular methoxy, ethoxy, i-propyloxy and i-butyloxy groups, are selected. This is advantageous, since no substances which irritate mucous membranes are released during the curing of compositions comprising alkoxy groups. The alcohols formed by hydrolysis of the residues are harmless in the quantities released, and evaporate. However, acyloxy groups, such as an acetoxy group $-O-CO-CH_3$, can also be used as hydrolyzable groups.

As described above, the polymer backbone of such radiation curable polymers may be selected from the group consisting of polyurethanes, polyethers/polyoxyalkylenes, poly(meth)acrylates, polyesters, polyorganosiloxanes and combinations thereof. Exemplary types of such backbones are described in the following.

A "polyether" is understood to be a polymer in which the organic repeating units comprise ether functionalities C-O-C in the main chain. Polymers having lateral ether groups, such as cellulose ethers, starch ethers and vinyl ether polymers, as well as polyacetals such as polyoxymethylene (POM) are not included in the polyethers. The polyethers are preferably those described above in relation to the polyurethanes.

A "poly(meth)acrylic acid ester" is understood to be a polymer based on (meth)acrylic acid esters, which therefore has as a repeating unit the structural motif $-CH_2-CR^a(COOR^b)-$, where $R^a$ denotes a hydrogen atom (acrylic acid ester) or a methyl group (methacrylic acid ester) and $R^b$ denotes linear alkyl residues, branched alkyl residues, cyclic alkyl residues and/or alkyl residues comprising functional substituents, for example methyl, ethyl, isopropyl, cyclohexyl, 2-ethylhexyl or 2-hydroxyethyl residues.

A "polyurethane" is understood to be a polymer which has at least two urethane groups -NH-C(=O)-O-in the main chain. Polyurethane obtainable by reacting at least i) a polyol or a mixture of two or more polyols and ii) a polyisocyanate or a mixture of two or more polyisocyanates.

A "polyol" is understood to be a compound which contains at least two OH groups, irrespective or whether the compound contains other functional groups. However, a polyol used in accordance with this definition preferably contains only OH groups as functional groups or, if other functional groups are present, none of these other functional groups is reactive at least to isocyanates under the conditions prevailing during the reaction of the polyol(s) and polyisocyanate(s).

The polyols suitable for preparing the polyurethane generally include polyether polyols, polyester polyols, polycarbonates and the like, but are preferably polyether polyols. The polyether polyol is preferably a polyalkylene oxide, particularly preferably polyethylene oxide and/or polypropylene oxide. In preferred embodiments, a polyether or a mixture of two polyethers are used. The polyethers and polyesters described herein in relation to polyurethanes are also suitable as backbones *per se.*

The number average molecular weight $M_n$ of suitable polyethers on which the polymer is based is preferably 2000 to 100,000 g/mol (daltons), particularly preferably at least 6000 g/mol and in particular at least 8000 g/mol. Particularly advantageous viscoelastic properties can be achieved if polyethers having a narrow molecular weight distribution, and thus low polydispersity (e.g. below 3), are used. These can be produced, for example, by so-called double metal cyanide catalysis (DMC catalysis). Polyethers produced in this way are distinguished by a particularly narrow molecular weight distribution, by a high average molecular weight and by a very low number of double bonds at the ends of the polymer chains.

The number average molecular weight $M_n$, as well as the weight average molecular weight $M_w$, is determined according to the present invention by gel permeation chromatography (GPC, also known as SEC) at 23°C using a styrene standard. The molecular weight can be determined by gel permeation chromatography (GPC) with tetrahydrofuran (THF) as the eluent according to DIN 55672-1:2007-08, preferably at 23°C or 35°C. Molecular weights of monomeric compounds are calculated based on the respective molecular formula and the known molecular weights of the individual atoms. These methods are known to one skilled in the art. The polydispersity is derived from the average molecular weights $M_w$ and $M_n$. It is calculated as $PD = M_w/M_n$.

The polyols to be used may have an OH value of preferably about 5 to about 15 and, more preferably, of about 10. The percentage content of primary OH groups should be below about 20%, based on all the OH groups, and is preferably below 15%. In one particularly advantageous embodiment, the acid value of the polyethers used is below about 0.1, preferably below 0.05 and, more preferably, below 0.02.

Besides the polyethers, a polyol mixture that may contain other polyols can be used. For example, it may contain polyester polyols with a molecular weight of about 200 to about 30,000.

A "polyisocyanate" is understood to be a compound which has at least two isocyanate groups -NCO. This compound does not have to be a polymer, and instead is frequently a low molecular compound.

The polyisocyanates suitable for preparing the polyurethanes include ethylene diisocyanate, 1,4-tetramethylene diisocyanate, 1,4-tetramethoxybutane diisocyanate, 1,6-hexamethylene diisocyanate (HDI), cyclobutane-1,3-diisocyanate, cyclohexane-1,3- and -1,4-diisocyanate, bis(2-isocyanatoethyl)fumarate, 1-isocyanato-3,3,5-trimethyl-5-isocyanatomethylcyclohexane (isophorone diisocyanate, IPDI), 2,4- and 2,6-hexahydrotoluylene diisocyanate, hexahydro-1,3- or -1,4-phenylene diisocyanate, benzidine diisocyanate, naphthalene-1,5-diisocyanate, 1,6-diisocyanato-2,2,4-trimethylhexane, 1,6-diisocyanato-2,4,4-trimethylhexane, xylylene diisocyanate (XDI), tetramethylxylylene diisocyanate (TMXDI), 1,3- and 1,4-phenylene diisocyanate, 2,4- or 2,6-toluylene diisocyanate (TDI), 2,4'-diphenylmethane diisocyanate, 2,2'-diphenylmethane diisocyanate, or 4,4'-diphenylmethane diisocyanate (MDI), and the isomeric mixtures thereof. Also suitable are partially or completely hydrogenated cycloalkyl derivatives of MDI, for example completely hydrogenated MDI ($H_{12}$-MDI), alkyl-substituted diphenylmethane diisocyanates, for example mono-, di-, tri-, or tetraalkyldiphenylmethane diisocyanate and the partially or completely hydrogenated cycloalkyl derivatives thereof, 4,4'-diisocyanatophenylperfluorethane, phthalic acid-bis-isocyanatoethyl ester, 1 chloromethylphenyl-2,4- or -2,6-diisocyanate, 1-bromomethylphenyl-2,4- or -2,6-diisocyanate, 3,3'-bis-chloromethyl ether-4,4'-diphenyl diisocyanate, sulfur-containing diisocyanates such as those obtainable by reacting 2 moles diisocyanate with 1 mole thiodiglycol or dihydroxydihexyl sulfide, diisocyanates of dimer fatty acids, or mixtures of two or more of the named diisocyanates. The polyisocyanate is preferably IPDI, TDI or MDI.

Other polyisocyanates suitable include isocyanates with a functionality of three or more obtainable, for example, by oligomerization of diisocyanates, more particularly by oligomerization of the isocyanates mentioned above. Examples of such tri- and higher isocyanates are the triisocyanurates of HDI or IPDI or mixtures thereof or mixed triisocyanurates thereof and polyphenyl methylene polyisocyanate obtainable by phosgenation of aniline/formaldehyde condensates.

For polyurethane synthesis, there is preferably a stoichiometric excess of NCO groups of the polyisocyanates with respect to the hydroxy groups of the polyols, "the polyols" and "the polyisocyanates" in each case also encompassing the presence of only one polyol and/or only one polyisocyanate. This stoichiometric excess must exist under the process conditions; i.e., it is not sufficient when the excess is nominally present, but a portion of the NCO groups of the polyisocyanates reacts with reactants other than the OH groups of the polyols, for example with monofunctional alcohols, so that there is a de facto shortage of NCO groups of the polyisocyanates with respect to the OH groups of the polyols.

The ratio of the number of OH groups of the polyols to the number of NCO groups of the polyisocyanates is particularly preferably 1:3 to 1:1.1, in particular 1:2.5 to 1:1.5.

The "polyorganosiloxanes" are preferably polydiorganosiloxanes, more preferably polydimethylsiloxanes. Preferably, an α,ω-dihydroxy-terminated polydiorganosiloxane, particularly an α,ω-dihydroxy-terminated polydimethylsiloxane is used as the polyorganosiloxane. Particularly preferred are α,ω-dihydroxy-terminated polydimethylsiloxanes, which have a kinematic viscosity at 25°C of 5000 to 120,000 cSt, particularly 10,000 to 100,000 cSt, and particularly preferably 50,000 to 90,000 cSt.

The hydroxyl-functionalized polysiloxanes disclosed herein may possess a molecular weight (Mn) of from 500 to 150000 g/mol, preferably from 5000 to 100000, more preferably from 10000 to 100000. Moreover, the polymers may be characterized by a polydispersity index in the range from 1.0 to 5.0, preferably from 1.0 to 2.5.

Suitable hydroxyl terminated organopolysiloxanes may have the following structure:

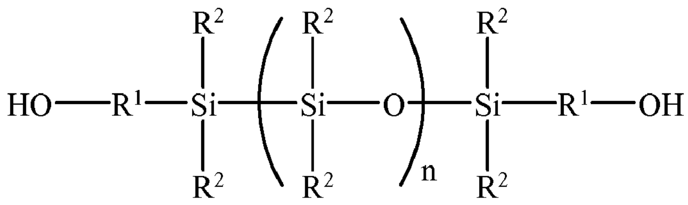

wherein each $R^1$ is independently chosen from $C_1$-$C_{12}$ alkyl, preferably $C_1$-$C_6$ alkyl, $C_2$-$C_{12}$ alkylether e.g. one or more O atoms between the C atoms, $C_3$-$C_6$ alicyclic and phenyl. Any $R^1$ can be independently substituted in any position by alkyl, alkoxy, halogen or epoxy moieties. Each $R^2$ is independently chosen from C1-C12 alkyl, preferably C1-C6 alkyl, C3-C6 alicyclic and phenyl. Any $R^2$ can be independently substituted in any position by alkyl, alkoxy, halogen or epoxy moieties. n can be an integer up to about 2,000, but n is more typically an integer from 1 to 200, preferably 5 to 200 and more preferably 10 to 150.

The total proportion of all the polymers described herein in the printable composition is preferably 10 to 90 wt.% based on the total weight of the curable composition.

*Fillers*

All printable compositions described herein may comprise at least one filler. The at least one filler, may, without limitation, be selected from chalk, powdered limestone, silica, such as precipitated and/or pyrogenic silica, zeolites, bentonites, magnesium carbonate, kieselguhr, alumina, clay, tallow, titanium oxide, iron oxide, zinc oxide, sand, quartz, flint, mica, powdered glass and other ground minerals. In preferred embodiments, the filler(s) are precipitated and/or pyrogenic silica. Furthermore, organic fillers can also be used, in particular carbon black, graphite, wood fibers, wood flour, sawdust, cellulose, cotton, pulp, wood chips, chopped straw, chaff, ground walnut shells and other short-cut fibers. Furthermore, short fibers such as glass fibers, glass filament, polyacrylonitrile, carbon fibers, Kevlar fibers or polyethylene fibers can also be added. Aluminum powder is also suitable as a filler. In addition, hollow spheres with a mineral shell or a plastic shell are suitable as fillers. These can be e.g. hollow glass spheres which are commercially available with the trade names Glass Bubbles®. Plastic-based hollow spheres are commercially available, e.g. with the names Expancel® or Dualite®. These are composed of inorganic or organic substances, each with a diameter of 1 mm or less, preferably of 500 μm or less. Generally, fillers which make the preparations thixotropic are preferred. These fillers are also described as rheological auxiliaries.

The filler(s) are preferably used in a quantity of 1 to 90 wt.%, for example 5 to 30 wt.%, based on the total weight of the composition according to the invention. An individual filler or a combination of several fillers can be used.

In various embodiments, the filler comprises silica. For example, a highly disperse silica with a BET surface area (DIN ISO 9277; DIN 66132) of 10 to 500 $m^2/g$ can be used as a filler. The use of such a silica may contribute to reinforcing the hardened preparation. By means of this reinforcement, for example the initial strengths and tensile shear strengths of the hardened composition may be improved. Preferably, coated silicas with a BET surface area of 100 to 400, more preferably 100 to 300, in particular 150 to 300 and most particularly preferably 160 to 300 $m^2/g$, are used. Suitable silicas are for example commercially available from Wacker under the tradename HDK®, including HDK® H18.

In various embodiments, the filler comprises chalk (calcium carbonate), optionally surface coated with fatty acids. Cubic, non-cubic, amorphous and other modifications of calcium carbonate can be used as chalk. Preferably, the chalks used are surface treated or coated. As a coating agent, preferably fatty acids, fatty acid soaps and fatty acid esters are used, for example lauric acid, palmitic acid or stearic acid, sodium or potassium salts of such acids or their alkyl esters. In addition, however, other surface-active substances, such as sulfate esters of long-chain alcohols or alkylbenzenesulfonic acids or their sodium or potassium salts or coupling reagents based on silanes or titanates, are

also suitable. The surface treatment of chalks is often associated with an improvement in processability and adhesive strength and also the weathering resistance of the compositions.

Depending on the desired property profile, precipitated or ground chalks or mixtures thereof can be used. Ground chalks can be produced, for example, from natural lime, limestone or marble by mechanical grinding, using either dry or wet methods. Depending on the grinding method, fractions having different average particle sizes can be obtained. Advantageous specific surface area values (BET) are between 1.5 $m^2/g$ and 50 $m^2/g$.

In preferred embodiments, chalk and/or silica, for example both, are used as fillers.

If used, zeolites, preferably alkali aluminosilicates are used, for example sodium-potassium aluminosilicates of the general empirical formula $aK_2O*bNa_2O*Al_2O_3*2SiO*nH_2O$ with $0 < a, b < 1$ and $a + b = 1$. The pore opening of the zeolite or zeolites used is just large enough to accept water molecules. Accordingly, an effective pore opening of the zeolites of less than 0.4 nm is preferred. Particularly preferably, the effective pore opening is 0.3 nm $\pm$ 0.02 nm. The zeolite(s) is/are preferably used in the form of a powder.

*Photoinitiators*

The printable compositions may further comprise at least one catalyst for promoting the crosslinking of radiation curable terminal groups, such as (meth)acrylate terminal groups. The at least one catalyst may then be a photoinitiator. Photoinitiators may be radical or cationic photoinitiators. Suitable compounds are well-known in the art and include, without limitation, benzoin ethers, such as benzoin methyl ether and benzoin isopropyl ether, substituted acetophenones, such as 2,2-diethoxyacetophenon (commercially available under the tradename Irgacure 651® from BASF SE), 2,2-dimethoxy-2-phenyl-1-phenylethanone, dimethoxyhydroxyacetophenone, substituted $\alpha$-ketols, such as 2-methoxy-2-hydroxypropiophenone, aromatic sulfonylchlorides, such as 2-naphthyl sulfonyl chloride, and photoactive oximes, such as 1-phenyl-1,2-propandion-2-(O-ethoxycarbonyl)oxime. The mentioned and further suitable photoinitiators can comprise the following residues: benzophenone-, acetophenone-, benzile-, benzoin-, hydroxyalkylphenone-, phenylcyclohexylketone-, anthrachinon-, trimethylbenzoylphosphinoxide-, methylthiophenylmorpholinketone-, aminoketone-, azobenzoin-, thioxanthon-, hexarylbisimidazole-, triazin-, or Fluorenone, wherein each of these residues may additionally be substituted with one or more halogen atoms and/or one or more alkoxy groups and/or one or more amino or hydroxy groups. An overview over suitable photoinitiators can be found in Fouassier: "Photoinititation, Photopolymerization and Photocuring: Fundamentals and Applications", Hanser-Verlag, München 1995. In addition, reference is made to Carroy et al. in "Chemistry and Technology of UV and EB Formulation for Coatings, Inks and Paints", Oldring (Hrsg.), 1994, SITA, London. Specific examples of suitable compounds include, without limitation, oxyphenyl acetic acid ester based initiator and ethyl (2,4,6-trimethylbenzoyl)-phenyl-phosphinate.

The compositions contain the photoinitiators preferably in an amount of from about 0.01 to 5.0 % by weight, preferably 0.1 to 4.0 % by weight, more preferably 0.5 to 3 % by weight, based in each case on the total weight of the composition. If a mixture of different photoinitiators is used, the amounts refer to the total amount in the composition.

*Condensation catalysts*

The printable compositions according to the invention may further comprise at least one condensation catalyst if they contain moisture curable groups, for example in form of dual cure polymers. The at least one condensation catalyst serves as a curing catalyst for the polymers having moisture curable groups, such as silane groups, for example those of formula (II) above.

In various embodiments, the curing catalyst may be a tin compound, preferably an organotin compound or an inorganic tin salt. Tin in these tin compounds is preferably bivalent or tetravalent. Suitable inorganic tin salts are, for example, tin(II) chloride and tin(IV) chloride. Organotin compounds (tin organyles) are used preferably as the tin compounds, however. Suitable organotin compounds are, for example, the 1,3-dicarbonyl compounds of bivalent or tetravalent tin, for example, the acetylacetonates such as di(n-butyl)tin(IV) di(acetylacetonate), di(n-octyl)tin(IV) di(acetylacetonate), (n-octyl)(n-butyl)tin(IV) di(acetylacetonate); the dialkyl tin(IV) dicarboxylates, for example, di-n-butyltin dilaurate, di-n-butyltin maleate, di-n-butyltin diacetate, di-n-octyltin dilaurate, di-n-octyltin diacetate, or the corresponding dialkoxylates, for example, di-n-butyltin dimethoxide; oxides of tetravalent tin, for example, dialkyltin oxides, such as, for example, di-n-butyltin oxide and di-n-octyltin oxide; and the tin(II) carboxylates such as tin(II) octoate or tin(II) phenolate.

Also suitable are tin compounds of ethyl silicate, dimethyl maleate, diethyl maleate, dioctyl maleate, dimethyl phthalate, diethyl phthalate, dioctyl phthalate, such as, for example, di(n-butyl)tin(IV) di(methyl maleate), di(n-butyl)tin(IV) di(butyl maleate), di(n-octyl)tin(IV) di(methyl maleate), di(n-octyl)tin(IV) di(butyl maleate), di(n-octyl)tin(IV) di(isooctyl maleate); and di(n-butyl)tin(IV) sulfide, $(n\text{-butyl})_2Sn(SCH_2COO)$, $(n\text{-octyl})_2Sn(SCH_2COO)$, $(n\text{-octyl})_2Sn(SCH_2CH_2COO)$, $(n\text{-octyl})_2Sn(SCH_2CH_2COOCH_2CH_2OCOCH_2S)$, $(n\text{-butyl})_2\text{-}Sn(SCH_2COO\text{-i-}C_8H_{17})_2$, $(n\text{-octyl})_2Sn(SCH_2COO\text{-i-}C_8H_{17})_2$, and $(n\text{-octyl})_2Sn(SCH_2COO\text{-n-}C_8H_{17})_2$.

In some embodiments, the tin compound is selected from 1,3-dicarbonyl compounds of bivalent or tetravalent

tin, the dialkyltin(IV) dicarboxylates, the dialkyltin(IV) dialkoxylates, the dialkyltin(IV) oxides, the tin(II) carboxylates, and mixtures thereof.

In various embodiments, the tin compound is a dialkyltin(IV) dicarboxylate, particularly di-n-butyltin dilaurate or di-n-octyltin dilaurate.

Additionally or alternatively, other metal-based condensation catalysts may be used, including, without limitation, compounds of titanium such as organotitanates or chelate complexes, cerium compounds, zirconium compounds, molybdenum compounds, manganese compounds, copper compounds, aluminum compounds, or zinc compounds or their salts, alkoxylates, chelate complexes, or catalytically active compounds of the main groups or salts of bismuth, lithium, strontium, or boron.

Further suitable (tin-free) curing catalysts are, for example, organometallic compounds of iron, particularly the 1,3-dicarbonyl compounds of iron such as, e.g., iron(III) acetylacetonate.

Boron halides such as boron trifluoride, boron trichloride, boron tribromide, boron triiodide, or mixtures of boron halides can also be used as curing catalysts. Particularly preferred are boron trifluoride complexes such as, e.g., boron trifluoride diethyl etherate, which as liquids are easier to handle than gaseous boron halides.

Further, amines, nitrogen heterocycles, and guanidine derivatives are suitable in general for catalysis. An especially suitable catalyst from this group is 1,8-diazabicyclo[5.4.0]undec-7-ene (DBU).

Titanium, aluminum, and zirconium compounds, or mixtures of one or more catalysts from one or more of the just mentioned groups may also be used as catalysts.

In addition, carboxylic acid salts of metals or also a mixture of a number of such salts can be employed as curing catalysts, whereby these are selected from the carboxylates of the following metals: calcium, vanadium, iron, zinc, titanium, potassium, barium, manganese, nickel, cobalt, and/or zirconium.

Of the carboxylates, the calcium, vanadium, iron, zinc, titanium, potassium, barium, manganese, and zirconium carboxylates are preferred, because they exhibit a high activity. Calcium, vanadium, iron, zinc, titanium, and zirconium carboxylates are particularly preferred. Iron and titanium carboxylates are very particularly preferred.

The curable compositions contain the condensation catalyst preferably in an amount of from about 0.01 to 1.0 % by weight, preferably 0.1 to 1.5 % by weight, based in each case on the total weight of the composition. If a mixture of different catalysts is used, the amounts refer to the total amount in the composition.

*Core-shell particles*

In some embodiments, the printable compositions, such as the epoxy or polyurethane compositions described herein, may further comprise core-shell particles, especially core-shell rubbers (CSRs). These core-shell particles can be used to improve the mechanical properties of the printed part, especially the toughness. In principle all known core-shell particles could be used.

In various embodiments of the invention the core-shell rubbers can be dispersed in a resin matrix, in particular an epoxy resin matrix. The epoxy resin matrix can be chosen from the above described epoxy resins, in particularly preferred embodiments, the epoxy resin matrix for the CSR is similar to the used epoxy resin for the printable composition, e.g. a cycloaliphatic epoxy resin as matrix resin in case the printable compositions contains a cycloaliphatic epoxy resin. If the core-shell rubbers are present in an epoxy resin matrix, the amount of epoxy resin counts towards the proportion of the total epoxy resins in the composition. In various embodiments the polymer, which forms the shell of the core-shell rubber, has a sufficient affinity for the epoxy resin used as matrix and/or base resin, such that the core-shell rubber particles are present in the epoxy resin as primary particles, dispersed in a stable manner.

In preferred embodiments, both the core and the shell of the core-shell rubber consists of a polymer having glass transition temperatures preferably less than 0°C, preferably -30°C or lower. The glass transition temperature can be determined by means of DSC (in accordance with DIN EN ISO 11357 at a heating rate of 10°C/min). The core-shell rubber particles preferably have a size of 0.03 to 50 $\mu$m, particularly preferably 1 to 20 $\mu$m, even more particularly preferably of less than 5 $\mu$m. A core-shell rubber particle usually even has an average diameter of just 500 nm or less than 200 nm, i.e. approximately 25 to 22 nm or 50 to 150 nm.

The core material of a CSR preferably consists of a diene homopolymer or a copolymer having elastomeric properties, such as a homopolymer of butadiene or isoprene, a copolymer of butadiene or isoprene with one or more ethylenically unsaturated monomer(s), such as vinyl aromatic monomer(s), (meth)acrylonitrile and/or (meth)acrylate. Preferred polymers as core material are selected from polybutadiene, polybutyl acrylate, polydimethylsiloxane, polyacrylates, polymethacrylates, poly(meth)acrylic acids and poly(meth)acrylic esters and co- or terpolymers thereof with polystyrene, polyacrylonitrile or polysulfide, more particularly preferably from polybutadiene, polydimethylsiloxane or polybutyl acrylate. Elastomeric polysiloxanes, such as polydimethylsiloxane or crosslinked polydimethylsiloxane, are also suitable as core material. The diene homo- and copolymers already disclosed above as core material are preferably also used as shell material.

If a polymer or a copolymer not having elastomeric properties (preferably a thermoplastic or thermoset/crosslinking polymer) is to be used as shell material, polymers of this type are selected for example from polystyrene, poly(meth)acrylamide, polyacrylonitrile, polyacrylate mono-, co- or terpolymers, polymethacrylate mono-, co- or terpolymers or styrene/acrylonitrile/glycidyl methacrylate terpolymers, or from a polymer or a copolymer from among one or more monomers of unsaturated acids and anhydrides (for example acrylic acid).

The core-shell rubber particles can consist of a number of layers, for example more than two layers. A CSR of this type preferably has a central core, which consists of a first diene homopolymer or copolymer having elastomeric properties, which is enclosed by a second core formed from a second (different) diene homopolymer or copolymer, likewise having elastomeric properties.

In various embodiments of the present invention the used CSRs have a core and at least two concentric shells having different chemical compositions and/or properties. Particles which have a core formed from polybutadiene and a shell formed from polybutadiene, polystyrene or a polybutadiene-polystyrene copolymer are preferred. Suitable CSRs are commercially obtainable for example from Kaneka and are present in the form of phase-separated particles dispersed in epoxy resins. These particles have a core formed from a copolymer of (meth)acrylate-butadiene-styrene, wherein butadiene is the primary component of the copolymer. Further commercially obtainable masterbatches of core-shell rubber particles dispersed in epoxy resins are, for example, the product Genioperl M23A from Wacker (a dispersion of 30 wt% CSR in an aromatic epoxy resin based on bisphenol A diglycidyl ether; the CSRs have an average diameter of approximately 100 nm and contain a core formed from elastomeric crosslinked silicone, onto which an epoxy-functional acrylate copolymer has been grafted).

In various embodiments, the printable composition preferably contains 1 to 15 wt.%, preferably 2 to 10 wt.%, based on the total weight of the printable composition, of at least one of the above-described core-shell rubbers.

*Additives*

The composition according to the invention may comprise further ingredients in addition to the components mentioned above, which can contribute to imparting the cured materials with the desired properties.

These include, in principle, all additives known in the prior art and conventional additional ingredients. Such additional ingredients include, but are not limited to, adhesion promoters, surfactants, plasticizers, diluents, reactive diluents, flow agents, coupling agents, wetting agents, flame retardants, preservatives, stabilizers, defoaming agents, pigments, dyes, moisture scavengers, crosslinking agents, blowing agents, conductivity imparting agents and light/UV stabilizers. If the composition is radiation, such as UV curable, the additional components should preferably be non-radiation (UV) absorbing. The additives are preferably present in an amount of less than 20 % by weight, in particular less than 10 % by weight, preferably less than 5 % by weight, in each case based on the total printable composition.

*Devices*

The invention further relates to a 3D printing device that comprises a print head and a radiation source and a means to avoid exposure of the orifice of the print head and the printable and radiation curable composition exiting the print head orifice to the radiation of the radiation source.

All embodiments disclosed above in relation to the inventive methods, in particular in so far they concern the print head, the radiation source and the shielding device are similarly applicable to the devices of the invention.

## Claims

**1.** Method for additive manufacturing a three-dimensional part in a layer-by-layer manner, wherein the method comprises

(i) providing a carrier substrate to support the three-dimensional part and a print head connected to a reservoir of at least one printable and radiation curable composition and a source of radiation for curing the composition;
(ii) printing the at least one printable and radiation curable composition with the print head in form of extrudate strands onto the carrier substrate to form a first layer;
(iii) curing the at least one printable and radiation curable composition by exposure of the printed layer to radiation emitted by the source of radiation, wherein the orifice of the print head and at least one the printable and radiation curable composition exiting the print head orifice are not exposed to the radiation to avoid premature curing of the at least one printable and radiation curable composition; and
(iv) optionally repeating steps (ii) and (iii) at least once to form a second or subsequent layer.

**2.** The method of claim 1, wherein the source of radiation is a light or UV light source.

**3.** The method of any one of the preceding claims, wherein the source of radiation is connected to the print head and movable together with the print head, being arranged such that the printed layers are exposed to the radiation.

**4.** The method of any one of the preceding claims, wherein the orifice of the print head, the printable and radiation curable composition exiting the print head orifice and an area around the print head orifice are shielded from the radiation.

**5.** The method of claim 4, wherein the area around the print head orifice shielded from the radiation is sized such that the printable and radiation curable composition is only exposed to the radiation once it has formed the layer.

**6.** The method of claim 5, wherein the radiation shielded area around the print head orifice has a diameter about 1 to 5 times the thickness of the printed layer.

**7.** The method of any one of the preceding claims, wherein the radiation shielding is provided by a device connected to the print head and arranged such that it blocks the radiation from the radiation source in the area of the orifice of the print head and the printable and radiation curable composition exiting the print head orifice and optionally an area around the print head orifice.

**8.** The method of claim 7, wherein the device is made of a material that blocks radiation.

**9.** The method of any one of claims 7 to 8, wherein the device is formed such that it provides a radiation shielded area of the desired size and shape.

**10.** The method of any one of claims 7 to 9, wherein the device is adjustable in size and/or position to adjust to the size and/or position and/or type of radiation source used and the type of the printable and radiation curable composition.

**11.** The method of any one of the preceding claims, wherein the printable and radiation curable composition comprises a polymer base material selected from the group consisting of epoxides, acrylates, polyurethanes, polyethers, polyesters, silanes, silane-modified polymers and combinations thereof, including hybrid polymers, wherein said polymers comprise at least one radiation curable functional group.

**12.** The method of any one of the preceding claims, wherein the printable composition is in form of a printable paste.

**13.** 3D printing device comprising a print head, a radiation source and a means to avoid exposure of the orifice of the print head and the printable and radiation curable composition exiting the print head orifice to the radiation of the radiation source.

Europäisches Patentamt
European Patent Office
Office européen des brevets

# EUROPEAN SEARCH REPORT

Application Number
EP 19 17 4134

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2018/207863 A1 (PORTER DANIEL [US] ET AL) 26 July 2018 (2018-07-26)<br>* figures 5, 19(c) *<br>* paragraphs [0071], [0073], [0098], [0124] *<br>* claims 4, 15 *<br>----- | 1-9, 11-13<br><br>10 | INV.<br>B29C64/118<br>B29C64/194<br>B29C64/209<br>B29C64/264<br>B33Y10/00<br>B33Y30/00 |
| X | WO 2017/149525 A1 (MASSIVIT 3D PRINTING TECH LTD [IL])<br>8 September 2017 (2017-09-08)<br>* figures 1, 2A, 2B, 3A *<br>* paragraphs [0006], [0024] - [0026] *<br>----- | 1-4, 7-10,12, 13 | |
| X<br><br>A | WO 2016/044547 A1 (DOW CORNING [US])<br>24 March 2016 (2016-03-24)<br>* paragraphs [0006], [0057], [0058], [0084] - [0086], [0089], [0092], [0114] *<br>* claims 1, 4 *<br>----- | 1-3,5, 11,12<br>13 | |
| X<br><br>A | US 2018/016464 A1 (LISITSIN NATALY [IL] ET AL) 18 January 2018 (2018-01-18)<br>* figure 1 *<br>* paragraphs [0004], [0076], [0087], [0089], [0090], [0011] *<br>* claim 28 *<br>----- | 1,2,5, 11,12<br>13 | TECHNICAL FIELDS SEARCHED (IPC)<br>B29C<br>B33Y |

The present search report has been drawn up for all claims

3

| Place of search | Date of completion of the search | Examiner |
|---|---|---|
| The Hague | 15 November 2019 | Schmitt, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 17 4134

This annex lists the patent family members relating to the patent documents cited in the above-mentioned European search report. The members are as contained in the European Patent Office EDP file on
The European Patent Office is in no way liable for these particulars which are merely given for the purpose of information.

15-11-2019

| Patent document cited in search report | Publication date | Patent family member(s) | Publication date |
|---|---|---|---|
| US 2018207863 A1 | 26-07-2018 | NONE | |
| WO 2017149525 A1 | 08-09-2017 | US 2019047309 A1 | 14-02-2019 |
| | | WO 2017149525 A1 | 08-09-2017 |
| WO 2016044547 A1 | 24-03-2016 | CN 106804110 A | 06-06-2017 |
| | | EP 3194501 A1 | 26-07-2017 |
| | | JP 2018500192 A | 11-01-2018 |
| | | US 2017283655 A1 | 05-10-2017 |
| | | US 2019106593 A1 | 11-04-2019 |
| | | WO 2016044547 A1 | 24-03-2016 |
| US 2018016464 A1 | 18-01-2018 | NONE | |

EPO FORM P0459

For more details about this annex : see Official Journal of the European Patent Office, No. 12/82